(19) Europäisches Patentamt
European Patent Office
Office européen des brevets

(11) Publication number: **0 263 068**
**A1**

# (12) EUROPEAN PATENT APPLICATION

(21) Application number: 87810551.9

(22) Date of filing: 23.09.87

(51) Int. Cl.[4]: C 08 K 5/13
C 08 L 23/02, C 07 C 83/04

(30) Priority: 29.09.86 US 912859

(43) Date of publication of application:
06.04.88 Bulletin 88/14

(84) Designated Contracting States: DE FR GB IT

(71) Applicant: CIBA-GEIGY AG
Klybeckstrasse 141
CH-4002 Basel (CH)

(72) Inventor: Ravichandran, Ramanathan
111 De Haven Drive, Apt. 125
Yonkers, NY 10703 (US)

Snead, Thomas E.
39 King Street
Dobbs Ferry, NY 10522 (US)

## (54) Compositions stabilized with substituted benzylhydroxylamines.

(57) There are described compositions comprising an organic material subject to oxidative, thermal and/or actinic degradation and at least one compound of the formula (I)

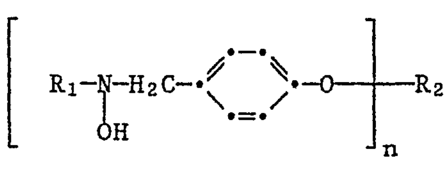

(I)

wherein
$R_1$ is hydrogen, alkyl of 1 to 36 carbon atoms, cycloalkyl of 5 to 12 carbon atoms, aralkyl of 7 to 9 carbon atoms or said aralkyl substituted by alkyl of 1 to 36 carbon atoms or $-OR_3$, wherein $R_3$ is hydrogen, alkyl of 1 to 36 carbon atoms, cycloalkyl of 5 to 12 carbon atoms, aralkyl of 7 to 9 carbon atoms or said aralkyl substituted by alkyl of 1 to 36 carbon atoms;
n is 1 - 4
$R_2$, when n is 1, hydrogen, alkyl of 1 to 36 carbon atoms, cycloalkyl of 5 to 12 carbon atoms, aralkyl of 7 to 9 carbon atoms, or said aralkyl substituted by alkyl of 1 to 36 carbon atoms;
$R_2$, when n is 2, is alkylene of 2 to 12 carbon atoms, alkylidene of 2 to 6 carbon atoms, cycloalkylene of 6 to 10 carbon atoms, arylene of 6 to 10 carbon atoms or alkylenearylenealkylene of 8 to 10 carbon atoms;
$R_2$, when n is 3, is alkanetriyl of 3 to 6 carbon atoms; and
$R_2$, when n is 4, is alkanetetrayl of 4 to 6 carbon atoms;
subject to the proviso that the organic material is a polyolefin homo- or copolymer, when n is 1.
Compounds of formula (I) wherein n is 2, 3 or 4 are new.

EP 0 263 068 A1

## Description

Compositions stabilized with substituted benzylhydroxylamines

The present invention relates to organic materials stabilized with substituted benzylhydroxylamines, the use of said benzylhydroxylamines for stabilizing organic materials against oxidative, thermal and/or actinic degradation as well as novel substituted benzylhydroxylamines.

Organic polymeric materials such as plastics and resins are subject to thermal, oxidative and photo-degradation. A great variety of stabilizers are known in the art for stabilizing a diversity of substrates. Their effectiveness varies depending upon the causes of degradation and the substrate stabilized. In general, it is difficult to predict which stabilizer will be most effective and most economical for any one area of application. For example, stabilizer effectiveness in reducing volatility may depend upon preventing bond scission in the substrate molecule. Limiting embrittlement and retaining elasticity in a polymer or rubber may require prevention of excessive crosslinking and/or chain scission. Prevention of discoloration may require inhibiting reactions which yield new chromophores or color bodies in the substrate or stabilizer. Problems of process stability and incompatibility must also be considered.

Various organic hydroxylamine compounds are generally known and some are commercially available. A number of patents disclose nitrogen-substituted hydroxylamines as antioxidant stabilizers for various substrates including polyolefins, polyesters and polyurethanes. U.S. 3,867,445, 3,432,578, 3,644,278, 3,778,464, 3,408,422, 3,926,909, 4,316,996 and 4,386,224 are representative of such patents which basically disclose N,N-dialkyl-, N,N-diaryl and N,N-diaralkyl hydroxylamine compounds and their color improvement and color stabilizing activity. For example, U.S. 3,926,909 discloses bis(4-methoxybenzyl)hydroxylamine, bis(4-ethoxybenzyl)hydroxylamine, bis(4-phenoxybenzyl)hydroxylamine and bis(4-butoxyphenyl)hydroxylamine as stabilizers for protecting spandex and other forms of polyurethanes.

The present invention pertains to compositions comprising an organic material subject to oxidative, thermal and/or actinic degradation and at least one compound of the formula (1)

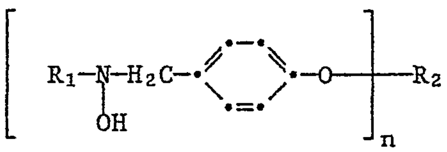 (I)

wherein

$R_1$ is hydrogen, alkyl of 1 to 36 carbon atoms, cycloalkyl of 5 to 12 carbon atoms, aralkyl of 7 to 9 carbon atoms or said aralkyl substituted by alkyl of 1 to 36 carbon atoms or $-OR_3$, wherein $R_3$, wherein $R_3$ is hydrogen, alkyl of 1 to 36 carbon atoms, cycloalkyl of 5 to 12 carbon atoms, aralkyl of 7 to 9 carbon atoms or said aralkyl substituted by alkyl of 1 to 36 carbon atoms;

n is 1 - 4;

$R_2$, when n is 1, is hydrogen, alkyl of 1 to 36 carbon atoms, cycloalkyl of 5 to 12 carbon atoms, aralkyl of 7 to 9 carbon atoms, or said aralkyl substituted by alkyl of 1 to 36 carbon atoms;

$R_2$, when n is 2, is alkylene of 2 to 12 carbon atoms, alkylidene of 2 to 6 carbon atoms, cycloalkylene of 6 to 10 carbon atoms, arylene of 6 to 10 carbon atoms or alkylenearylenealkylene of 8 to 10 carbon atoms;

$R_2$, when n is 3, is alkanetriyl of 3 to 6 carbon atoms; and

$R_2$, when n is 4, is alkanetetrayl of 4 to 6 carbon atoms;

subject to the proviso that the organic material is a polyolefin homo- or copolymer, when n is 1.

The compositions of this invention exhibit a variety of desirable properties stemming from the presence therein of the indicated hydroxylamine derivatives. Thus, the compounds serve to protect various substrates such as polyolefins, elastomers and lubricating oils against the adverse effects of oxidative and thermal degradation. These compounds are of higher molecular weight and thus more extraction resistant from the substrate. They are most effective as color improvers and process stabilizers in polyolefin compositions which may contain metal salts of fatty acids and which also contain a phenolic antioxidant. Thus, they serve to substantially reduce color formation resulting from the presence of the phenolic anti-oxidant and/or from the processing conditions as well as to directly protect the polymer from said processing conditions. They also prevent the discoloration of polyolefin compositions containing hindered amine light stabilizers or combinations of phenolic antioxidants and organic phosphites. In addition, the gas fading that may be experienced upon exposure to the combustion products of natural gas is also significantly reduced.

$R_1$ as aralkyl of 7 to 9 carbon atoms which is substituted by the group $-OR_3$ may be in particular phenylalkyl of 7 to 9 carbon atoms where the phenyl ring is preferably substituted in the para position by said $-OR_3$ group wherein $R_3$ has in particular the meanings listed below.

Examples of $R_1$, $R_2$ and $R_3$ as $C_1$-$C_{36}$-alkyl which can be straight-chain or branched are methyl, ethyl, n-propyl, n-butyl, tert-butyl, n-pentyl, n-octyl, 2-ethylhexyl, decyl, dodecyl, octadecyl, eicosyl, tetracosyl, triacontyl and hexatriacontyl. Alkyl groups of 1 to 18 carbon atoms are preferred.

$R_1$, $R_2$ and $R_3$ as cycloalkyl of 5 to 12 carbon atoms are for example cyclopentyl, cyclohexyl, cycloheptyl or

cyclooctyl. Cycloalkyl groups of 5 to 7 carbon atoms are preferred and cyclopentyl and cyclohexyl are especially preferred.

$R_1$, $R_2$ and $R_3$ as aralkyl of 7 to 9 carbon atoms or said aralkyl substituted by alkyl of 1 to 36 carbon atoms may be in particular phenylalkyl with 7 to 9 carbon atoms where the phenyl ring is optionally substituted by alkyl of 1 to 36 carbon atoms, preferably methyl. Examples are benzyl, α-methylbenzyl and α,α-dimethylbenzyl.

Examples of $R_2$ as alkylene of 2 to 12 carbon atoms are ethylene, hexamethylene, octamethylene and in particular dodecamethylene.

$R_2$ as alkylidene of 2 to 6 carbon atoms is preferably ethylidene.

$R_2$ as cycloalkylene of 6 to 10 carbon atoms is e.g. cyclohexylene, cyclooctylene or cyclodecylene. Cyclohexylene is preferred.

$R_2$ as arylene of 6 to 10 carbon atoms may be in particular phenylene.

$R_2$ as alkylenearylenealkylene of 8 to 10 carbon atoms is e.g. xylylene.

Examples of $R_2$ as alkanetriyl of 3 to 6 carbon atoms are glyceryl and trimethylyl propane.

An example of $R_2$ as alkanetetrayl of 4 to 6 carbon atoms is pentaerythrityl.

n is preferably 1 or 2.

$R_1$ is preferably alkyl of 1 to 18 carbon atoms, cycloalkyl of 5 to 6 carbon atoms, benzyl, α-methylbenzyl or α,α-dimethylbenzyl.

When n is 1, $R_2$ is preferably alkyl of 1 to 18 carbon atoms, cycloalkyl of 5 to 6 carbon atoms, benzyl, α-methylbenzyl or α,α-dimethylbenzyl.

According to a further preferred embodiment $R_1$ is a group

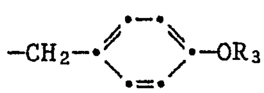

wherein $R_3$ is alkyl of 1 to 18 carbon atoms, cycloalkyl of 5 to 6 carbon atoms, benzyl, α-methylbenzyl or α,α-dimethylbenzyl.

When n is 1 and $R_1$ is a group

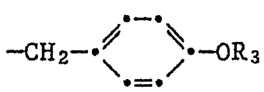 ,

$R_2$ is preferably identical to $R_3$.

When n is 2, $R_2$ is in particular alkylene of 2 to 12 carbon atoms, ethylidene, cyclohexylene, phenylene or xylylene.

Those compositions which contain at least one of the following compounds of formula (I) are preferred:
N,N-bis[p-methoxybenzyl]hydroxylamine,
N,N-bis[p-octadecyloxybenzyl]hydroxylamine,
1,12-bis[4-(N-benzylhydroxyiminomethyl)phenoxy]dodecane.

The instant invention also relates to new compounds of formula (Ia)

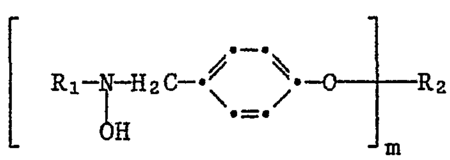 (Ia)

wherein
$R_1$ is hydrogen, alkyl of 1 to 36 carbon atoms, cycloalkyl of 5 to 12 carbon atoms , aralkyl of 7 to 9 carbon atoms or said aralkyl substituted by alkyl of 1 to 36 carbon atoms or $-OR_3$, wherein $R_3$ is hydrogen, alkyl of 1 to 36 carbon atoms, cycloalkyl of 5 to 12 carbon atoms, aralkyl of 7 to 9 carbon atoms or said aralkyl substituted by alkyl of 1 to 36 carbon atoms;
m is 2 - 4;
$R_2$, when m is 2, is alkylene of 2 to 12 carbon atoms, alkylidene of 2 to 6 carbon atoms, cycloalkylene of 6 to 10 carbon atoms, arylene of 6 to 10 carbon atoms or alkylenearylenealkylene of 8 to 10 carbon atoms;
$R_2$, when m is 3, is alkanetriyl of 3 to 6 carbon atoms; and
$R_2$, when m is 4, is alkanetetrayl of 4 to 6 carbon atoms.

Preferred meanings of $R_1$, $R_2$, $R_3$ and m in formula (Ia) are those listed under formula (I), m corresponding to n.

The compounds of formulae (I) and (Ia) can be prepared by methods known per se, e.g. by reacting a hydroxylamine of the formula (II)

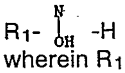 (II)

wherein $R_1$ has the meanings given above, preferably in the form of its hydrochloride, with a benzyl halide of the formula (III)

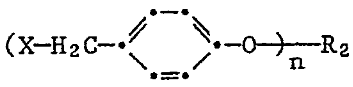 (III)

wherein X is preferabloy bromine and n and $R_2$ are as defined above.

The reaction is conveniently carried out in the presence of an organic solvent. The solvent can be an aromatic hydrocarbon such as e.g. benzene, toluene, xylene, and the like, a heterocyclic ether such as e.g. tetrahydrofuran, or preferably a solvent such as dimethylformamide. The reaction temperature usually ranges from 25 to 100°C. It is preferred in this reaction approach to conduct the reaction in the presence of an acid acceptor such as e.g. sodium carbonate.

The starting materials are items of commerce or can be prepared by known methods.

The compounds utilized in the compositions of the present invention are particularly effective in stabilizing organic materials subject to oxidative, thermal and/or actinic degradation, such as plastics, polymers and resins.

Substrates in which these compounds are particularly useful are polyolefins such as e.g. polyethylene and polypropylene, polystyrene, including impact polystyrene, ABS resin, SBR, isoprene. as well as natural rubber, polyesters including polyethylene therephthalate and polybutylene terephthalate, including copolymers, and lubricating oils such as those derived from mineral oil.

In general polymers which can be stabilized include

1. Polymers of monoolefins and diolefins, for example polypropylene, polyisobutylene, polybutene-1, polymethylpentene-1, polyisoprene or polybutadiene, as well as polymers of cycloolefins, for instance of cyclopentene or norbornene, polyethylene (which optionally can be crosslinked), for example high density polyethylene (HDPE), low density polyethylene (LDPE) and linear low density polyethylene (LLDPE).

2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).

3. Copolymers of monoolefines and diolefines with each other or with other vinyl monomers, such as, for example, ethylene/propylene, linear low density polyethylene (LLDPE) and its mixtures with low density polyethylene (LDPE), propylene/butene-1, ethylene/hexene, ethylene/ethylpentene, ethylene/heptene, ethylene/octene, propylene/isobutylene, ethylene/butene-1, propylene/butadiene, isobutylates, ethylene/vinyl acetate or ethylene/ acrylic acid copolymers and their salts (ionomers) and terpolymers of ethylene with propyl ene and a diene, such as hexadiene, dicyclopentadiene or ethylidene-norbornene; as well as mixtures of such copolymers and their mixtures with polymers mentioned in 1) above, for example polypropylene/ethylene-propylene-copolymers, LDPE/EVA, LDPE/EAA, LLDPE/EVA and LLDPE/EAA.

3a. Hydrocarbon resins (for example $C_5$-$C_9$) and hydrogenated modifications thereof (for example tackyfiers).

4. Polystyrene, poly-(p-methylstyrene), poly-(α-methylstyrene).

5. Copolymers of styrene or α-methylstyrene with dienes or acrylic derivatives, such as, for example, styrene/butadiene, styrene/acrylonitrile, styrene/alkyl methacrylate, styrene/maleic anhydride, styrene/butadiene/ethyl acrylate, styrene/acrylonitrile/methyl acrylate; mixtures of high impact strength from styrene copolymers and another polymer, such as, for example, from a polyacrylate, a diene polymer or an ethylene/propylene/diene terpolymer; and block copolymers of styrene, such as, for example, styrene/butadiene/styrene, styrene/ isoprene/styrene, styrene/ethylene/butylene/styrene or styrene/ethylene/propylene/styrene.

6. Graft copolymers of styrene or α-methylstyrene such as, for example, styrene on polybutadiene, styrene on polybutadiene-styrene or polybutadiene-acrylonitrile; styrene and acrylonitrile (or methacrylonitrile) on polybutadiene; styrene and maleic anhydride or maleimide on polybutadiene; styrene, acrylontrile and maleic anhydride or maleimide on polybutadiene; styrene, acrylonitrile and methyl methacrylate on polybutadiene, styrene and alkyl acrylates or methacrylates or polybutadiene, styrene and acrylonitrile on ethylene/propylene/diene terpolymers, styrene and acrylonitrile on polyacrylates or polymethacrylates, styrene and acrylonitrile on acrylate/butadiene copolymers, as well as mixtures thereof with the copolymers listed under 5) for instance the copolymer mixtures known as ABS-, MBS-, ASA- or AES-polymers.

7. Halogen-containing polymers, such as polychloroprene, chlorinated rubbers, chlorinated or sulfochlorinated polyethylene, epichlorohydrine homo- and copolymers, polymers from halogen-containing vinyl compounds, as for example, polyvinylchloride, polyvinylidene chloride, polyvinyl fluoride, polyvinylidene fluoride, as well as copolymers thereof, as for example, vinyl chloride/vinylidene chloride, vinyl chloride/vinyl acetate or vinylidene chloride/vinyl acetate copolymers.

8. Polymers which are derived from α,β-unsaturated acids and derivates thereof, such as polyacrylates

and polymethacrylates, polyacrylamide and polyacrylonitrile.

9. Copolymers from the monomers mentioned under 8) with each other or with other unsaturated monomers, such as, for instance, acrylonitrile/butadien, acrylonitrile/alkyl acrylate, acrylonitrile/alkoxyalkyl acrylate or acrylonitrile/vinyl halogenide copolymers or acrylonitrile/alkyl methacrylate/butadiene terpolymers.

10. Polymers which are derived from unsaturated alcohols and amines, or acyl derivatives thereof or acetals thereof, such as polyvinyl alcohol, polyvinyl acetate, polyvinyl stearate, polyvinyl benzoate, polyvinyl maleate, polyvinylbutyral, polyallyl phthalate or polyallyl-melamine; as well as their copolymers with olefins mentioned in 1) above.

11. Homopolymers and copolymers of cyclic ethers, such as polyalkylene glycols, polyethylene oxide, polypropylene oxide or copolymers thereof with bis-glycidyl ethers.

12. Polyacetals, such as polyoxymethylene and those polyoxymethylenes which contain ethylene oxide as a comonomer; polyacetals modified with thermoplastic polyurethanes, acrylates or MBS.

13. Polyphenylene oxides and sulfides, and mixtures of polyphenylene oxides with polystyrene or polyamides.

14. Polyurethanes which are derived from polyethers, polyesters or polybutadiens with terminal hydroxyl groups on the one side and aliphatic or aromatic polyisocyanates on the other side, as well as precursors thereof (polyisocyanates, polyols or prepolymers).

15. Polyamides and copolyamides which are derived from diamines and dicarboxylic acids and/or from aminocarboxylic acids or the corresponding lactams, such as polyamide 4, polyamide 6, polyamide 6/6, 6/10, 6/9, 6/12 and 4/6, polyamide 11, polyamide 12, aromatic polyamides obtained by condensation of m-xylene, diamine and adipic acid; polyamides prepared from hexamethylene diamine and isophthalic or/and terephthalic acid and optionally an elastomer as modifier, for example poly-2,4,4,-trimethylhexamethylene terephthalamide or poly-m-phenylene isophthalamide. Further copolymers of the aforementioned polyamides with polyolefins, olefin copolymers, ionomers or chemically bonded or grafted elastomers; or with polyethers, such as for instance, with polyethylene glycol, polypropylene glycol or polytetramethylene glycols. Polyamides or copolyamides modified with EPDM or ABS. Polyamides condensed during processing (RIM-polyamide systems).

16. Polyureas, polyimides and polyamide-imides.

17. Polyesters which are derived from dicarboxylic acids and diols and/or from hydroxycarboxylic acids or the corresponding lactones, such as polyethylene terephthalate, polybutylene terephthalate, poly-1,4-dimethylol-cyclohexane terephthalate, poly-[2,2-(4-hydroxyphenyl)-propane] terephthalate and polyhydroxybenzoates as well as block-copolyether-esters derived from polyethers having hydroxyl end groups.

18. Polycarbonates and polyester-carbonates.

19. Polysulfones, polyethersulfones and polyetherketones.

20. Crosslinked polymers which are derived from aldehydes on the one hand and phenols, ureas and melamines on the other hand, such as phenol/formaldehyde resins, urea/formaldehyde resins and melamine/formaldehyde resins.

21. Drying and non-drying alkyd resins.

22. Unsaturated polyester resins which are derived from copolyesters of saturated and unsaturated dicarboxylic acids with polyhydric alcohols and vinyl compounds as crosslinking agents, and also halogen-containing modifications thereof of low inflammability.

23. Thermosetting acrylic resins, derived from substituted acrylic esters, such as epoxy-acrylates, urethane-acrylates or polyesteracrylates.

24. Alkyd resins, polyester resins or acrylate resins in admixture with melamine resins, urea resins, polyisocyanates or epoxide resins as crosslinking agents.

25. Crosslinked epoxide resins which are derived from polyepoxides, for example from bis-glycidyl ethers or from cycloaliphatic diepoxides.

26. Natural polymers, such as cellulose, rubber, gelatine and derivatives thereof which are chemically modified in a polymerhomologous manner, such as cellulose acetates, cellulose propionates and cellulose butyrates, or the cellulose ethers, such as methylcellulose; rosins and their derivatives.

27. Mixtures of polymers as mentioned above, for example PP/EPDM, Polyamide 6/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPE/HIPS, PPE/PA 6.6 and copolymers, PA/HDPE, PA/PP, PA/PPE.

28. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellithates) and also mixtures of synthetic esters with mineral oils in any weight ratios, which materials may be used as plasticizer for polymers or as textile spinning oils, as well as aqueous emulsions of such materials.

29. Aqueous emulsions of natural or synthetic rubber, e.g. natural latex or latices of carboxylated styrene/butadiene copolymers.

Preferred compositions are those wherein the material to be stabilized is a synthetic polymer, especially a polyolefin homopolymer or copolymer.

In general, the compounds of the present invention are employed in from about 0.01 to about 5 % by weight of the stabilized composition, although this will vary with the particular substrate and application. An advantageous range is from about 0.5 to about 2 %, and especially about 0.1 to about 1 %.

The compounds of formula (I) may readily by incorporated into the material to be stabilized by conventional techniques, at any convenient stage prior to the manufacture of shaped articles therefrom. For example, the stabilizer may be mixed with the material to be stabilized in dry powder form, or a suspension or emulsion of the stabilizer may be mixed with a solution, suspension, or emulsion of the material to be stabilized.

The resulting stabilized materials can be applied in various forms, such as sheets, fibers, ribbons, moulding compositions, or as binders for lacquers, adhesives or putties.

The stabilized compositions of the invention may also contain various conventional additives such as the following:

1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, 2,6-di-nonyl-4-methylphenol.

1.2. Alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol.

1.3. Hydroxylated thiodiphenyl ethers, for example 2,2′-thiobis(6-tert-butyl-4-methylphenol), 2,2′-thiobis(4-octylphenol), 4,4′-thiobis(6-tert-butyl-3-methylphenol), 4,4′-thiobis(6-tert-butyl-2-methylphenol).

1.4. Alkylidenebisphenols, for example 2,2′-methylenebis(6-tert-butyl-4-methylphenol), 2,2′-methylenebis(6-tert-butyl-4-ethylphenol), 2,2′-methylenebis[4-methyl-6-(α-methylcyclohexyl)phenol], 2,2′-methylenebis(4-methyl-6-cyclohexylphenol), 2,2′-methylenebis(6-nonyl-4-methylphenol), 2,2′-methylenebis(4,6-di-tert-butylphenol), 2,2′-ethylidenebis(4,6-di-tert-butylphenol), 2,2′-ethylidenebis(6-tert-butyl-4-isobutylphenol), 2,2′-methylenebis[6-(α-methylbenzyl)-4-nonylphenol], 2,2′-methylenebis[6-(α,α-dimethylbenzyl)-4-nonylphenol], 4,4′-methylenebis(2,6-di-tert-butylphenol), 4,4′-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3′-tert-but yl-4′-hydroxyphenyl)butyrate], bis(3-tert-butyl-4-hydroxy-5-methylphenyl)dicyclopentadiene, bis[2-(3′-tert-butyl-2′-hydroxy-5′-methylbenzyl)-6-tert-butyl-4-methylphenyl] terephthalate.

1.5. Benzyl compounds, for example 1,3,5-tris(3,5-di-tert-butyl-4-hydroxybenzyl)-2,4,6-trimethylbenzene, bis(3,5-di-tert-butyl-4-hydroxybenzyl) sulfide, isooctyl 3,5-di-tert-butyl-4-hydroxybenzylmercaptoacetate, bis(4-tert-butyl-3-hydroxy-2,6-dimethylbenzyl) dithiolterephthalate, 1,3,5-tris(3,5-di-tert-butyl-4-hydroxybenzyl) isocyanurate, 1,3,5-tris(4-tert-butyl-3-hydroxy-2,6-dimethylbenzyl) isocyanurate, dioctadecyl 3,5-di-tert-butyl-4-hydroxybenzylphosphonate, calcium salt of monoethyl 3,5-di-tert-butyl-4-hydroxybenzylphosphonate, 1,3,5-tris(3,5-dicyclohexyl-4-hydroxybenzyl)isooyanurate.

1.6. Acylaminophenols, for example anilide of 4-hydroxylauric acid, anilide of 4-hydroxystearic acid, 2,4-bis(octylmercapto)-6-(3,5-di-tert-butyl-4-hydroxyanilino)-s-triazine, octyl N-(3,5-di-tert-butyl-4-hydroxyphenyl)carbamate.

1.7. Esters of β-(3,5-di-tert-butyl-4-hydroxyphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N′-bis(hydroxyethyl)oxalic acid diamide.

1.8. Esters of β-(5-tert-butyl-4-hydroxy-3-methylphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N′-bis(hydroxyethyl)oxalic acid diamide.

1.9. Esters of β-(3,5-dicyclohexyl-4-hydroxyphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl)isocyanurate, thiodiethylene glycol, N,N′-bis(hydroxyethyl)oxalic acid diamide.

1.10. Amides of β-(3,5-di-tert-butyl-4-hydroxyphenyl)propionic acid e.g. N,N′-bis(3,5-di-tert-butyl-4-hydroxyphenylpropionyl)hexamethylene-diamine, N,N′-bis(3,5-di-tert-butyl-4-hydroxyphenylpropionyl)trimethylene-diamine, N,N′-bis(3,5-di-tert-butyl-4-hydroxyphenylpropionyl)hydrazine.

2. UV absorbers and light stabilisers

2.1. 2-(2′-Hydroxyphenyl)benzotriazoles, for example the 5′-methyl, 3′,5′-di-tert-butyl, 5′-tert-butyl, 5′-(1,1,3,3-tetramethylbutyl), 5-chloro-3′,5′-di-tert-butyl, 5-chloro-3′-tert-butyl-5′-methyl, 3′-sec-butyl-5′-tert-butyl, 4′-octoxy, 3′,5′-di-tert-amyl and 3′,5′-bis(α,α-dimethylbenzyl) derivatives.

2.2. 2-Hydroxybenzophenones, for example the 4-hydroxy, 4-methoxy, 4-octoxy, 4-decyloxy,

4-dodecyloxy, 4-benzyloxy, 4,2′,4′-trihydroxy and 2′-hydroxy-4,4′-dimethoxy derivatives.

2.3. Esters of substituted and unsubstituted benzoic acids, for example, 4-tert-butylphenyl salicylate, phenyl salicylate, octylphenyl salicylate, dibenzoylresorcinol, bis(4-tert-butylbenzoyl)resorcinol, benzoylresorcinol, 2,4-di-tert-butylphenyl 3,5-di-tert-butyl-4-hydroxybenzoate and hexadecyl 3,5-di-tert-butyl-4-hydroxybenzoate.

2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxy-cinnamate, butyl α-cyano-β-methyl-p-methoxycinnamate, methyl α-carbomethoxy-p-methoxycinnamate and N-(β-carbomethoxy-β-cyanovinyl)-2-methylindoline.

2.5. Nickel compounds, for example nickel complexes of 2,2′-thio-bis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of 4-hydroxy-3,5-di-tert-butylbenzylphosphonic acid monoalkyl esters, e.g. of the methyl or ethyl ester, nickel complexes or ketoximes, e.g. of 2-hydroxy-4-methyl-phenyl undecyl ketoneoxime, nickel complexes of 1-phenyl-4-lauroyl-5-hydroxypyrazole, with or without additional ligands.

2.6. Sterically hindered amines, for example bis(2,2,6,6-tetramethylpiperidyl) sebacate, bis(1,2,2,6,6-pentamethylpiperidyl) sebacate, bis(1,2,2,6,6-pentamethylpiperidyl) n-butyl-3,5-di-tert-butyl-4-hydroxybenzylmalonate, the condensation product of 1-hydroxyethyl-2,2,6,6-tetramethyl-4-hydroxypiperidine und succinic acid, the condensation product of N,N′-bis(2,2,6,6-tetramethyl-4-piperidyl)hexamethylenediamine and 4-tert-octylamino-2,6-dichloro-1,3,5-s-triazine, tris(2,2,6,6-tetramethyl-4-piperidyl) nitrilotriacetate, tetrakis(2,2,6,6-tetramethyl-4-piperidyl)-1,2,3,4-butane tetracarboxylate, 1,1′-(1,2-ethanediyl)bis(3,3,5,5-tetramethylpiperazinone).

2.7. Oxalic acid diamides, for example 4,4′-dioctyloxyoxanilide, 2,2′-dioctyloxy-5,5′-di-tert-butyloxanilide, 2,2′-didodecyloxy-5,5′-di-tert-butyloxanilide, 2-ethoxy-2′-ethyloxanilide, N,N′-bis(3-dimethylaminopropyl)oxalamide, 2-ethoxy-5-tert-butyl-2′-ethyloxanilide and its mixture with 2-ethoxy-2′-ethyl-5,4′-di-tert-butyloxanilide and mixtures of ortho- and para-methoxy-disubstituted oxanilides and mixtures of o- and p-ethoxy-disubstituted oxanilides.

3. Metal deactivators, for example N,N′-diphenyloxalic acid diamide, N-salicylal-N′-salicyloylhydrazine, N,N′-bis(salicyloyl)hydrazine, N,N′-bis(3,5-di-tert-butyl-4-hydroxyphenylpropionyl)hydrazine, 3-salicyloylamino-1,2,4-triazole, bis(benzylidene)oxalic acid dihydrazide.

4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, tristearyl sorbitol triphosphite, tetrakis(2,4-di-tert-butylphenyl) 4,4′-biphenylene diphosphonite, 3,9-bis(2,4-di-tert-butylphenoxy)-2,4,8,10-tetraoxa-3,9-diphosphaspiro[5.5]undecane.

5. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

6. Polyamide stabilisers, for example, copper salts in combination with iodides and/or phosphorus compounds and salts of divalent manganese.

7. Basic co-stabilisers, for example, melamine, polyvinylpyrrolidone, dicyandiamide, triallyl cyanurate, urea derivatives, hydrazine derivates, amines, polyamides, polyurethanes, alkali metal salts and alkaline earth metal salts of higher fatty acids for example Ca stearate, Zn stearate, Mg stearate, Na ricinoleate and K palmitate, antimony pyrocatecholate or zinc pyrocatecholate.

8. Nucleating agents, for example, 4-tert.butyl-benzoic acid, adipic acid, diphenylacetic acid.

9. Fillers and reinforcing agents, for example, calcium carbonate, silicates, glass fibres, asbestos, talc, kaolin, mica, barium sulfate, metal oxides and hydroxydes, carbon black, graphite.

10. Other additives, for example, plasticisers, lubricants, emulsifiers, pigments, optical brighteners, flameproofing agents, antistatic agents and blowing agents.

The compositions of the invention preferably contain a metal salt of a higher fatty acid and/or a phenolic antioxidant.

While the instant hydroxylamine derivatives can be beneficially used as stabilizers for a variety of substrates, particularly the polyolefins, both alone and in conjunction with other coadditives, the introduction of the instant compounds into polyolefins, optionally containing various alkali metal, alkaline earth metal or aluminum salts of higher fatty acids (see Additive #7 hereinabove), with hindered phenolic antioxidants results in enhanced and particularly salubrious protection to such substrates in terms of reducing color formation stemming from the presence of the phenols. Such phenolic antioxidants include n-octadecyl 3,5-di-tert-butyl-4-hydroxyhydrocinnamate, neopentanetetrayl tetrakis(3,5-di-tert-butyl-4-hydroxyhydrocinnamate), di-n-octadecyl 3,5-di-tert-butyl-4-hydroxybenzylphosphonate, 1,3,5-tris(3,5-di-tert-butyl-4-hydroxybenzyl)isocyanurate, thiodiethylene bis(3,5-di-tert-butyl-4-hydroxyhydrocinnamate), 1,3,5-trimethyl-2,4,6-tris(3,5-di-tert-butyl-4-hydroxybenzyl)benzene, 3,6-dioxaoctamethylene-bis(3-methyl-5-tert-butyl-4-hydroxyhydrocinnamate), 2,6-di-tert-butyl-p-cresol, 2,2′-ethylidene-bis(4,6-di-tert-butylphenol), 1,3,5-tris(2,6-di-methyl-4-tert-butyl-3-hydroxybenzyl)isocyanurate, 1,1,3-tris(2-methyl-4-hydroxy-5-tert-butylphenyl)butane, 1,3,5-tris[2-(3,5-di-tert-butyl-4-hydroxyhydrocinnamoyloxy)ethyl]isocyanurate, 3,5-bis(3,5-di-tert-butyl-4-hydroxybenzyl)mesitol, hexamethylene-bis(3,5-di-tert-butyl-4-hydroxyhydrocinnamate), 1-(3,5-di-tert-butyl-4-hydroxyanilino)-3,5-bis(octylthio)-s-triazine, N,N'-hexamethylene-bis(3,5-di-tert-butyl-4-hydroxyhydrocinnamamide), calcium bis(ethyl 3,5-di-tert-butyl-4-hydroxybenzylphosphonate), ethylene-bis[3,3-bis-(3-tert-butyl-4-hydroxyphenyl)butyrate], octyl 3,5-di-tert-butyl-4-hydroxybenzylmercaptoacetate, bis(3,5-di-tert-butyl-4-hydroxyhydrocinnamoyl)hydrazide and N,N'-bis[2-(3,5-di-tert-butyl-4-hydroxyhydro cinnamoyloxy)ethyl]oxamide. Preferred antioxidants are neopentanetetrayl tetrakis(3,5-di-tert-butyl-4-hydroxyhydrocinnamate), n-octadecyl 3,5-di-tert-butyl-4-hydroxyhydrocinnamate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, 2,6-di-tert-butyl-p-cresol and 2,2'-ethylidene-bis(4,6-di-tert-butylphenol).

Likewise, the instant compounds prevent color formation when hindered amine light stabilizers are present, such hindered amines including bis(1,2,2,6,6-pentamethyl-4-piperidyl)-2-n-butyl-2-(3,5-di-tert-butyl-4-hydroxybenzyl)malonate; bis(2,2,6,6-tetramethyl-4-piperidyl)sebacate; dimethylsuccinate polymer with 1-hydroxyethyl-2,2,6,6-tetramethyl-4-hydroxypiperidine; and polymer of 2,4-dichloro-6-octylamino-s-triazine with N,N'-bis(2,2,6,6-tetramethyl-4-piperidyl)hexamethylenediamine.

The following examples illustrates the embodiments of this invention. Thus, they describe the preparation of various hydroxylamine derivatives, including those forming part of the invention, and of stabilized compositions. In these examples, all parts given are by weight unless otherwise specified.

Example 1: Preparation of N,N-bis[p-methoxybenzyl]hydroxylamine

A stirred mixture of 4.66 g of hydroxylamine hydrochloride and 28.4 g of sodium carbonate in 100 ml of dimethylformamide is admixed with a solution of 26.89 g of p-methoxybenzylbromide in 50 ml of dimethylformamide. After stirring at room temperature for 15 hours, the mixture is filtered and the filtrate concentrated under reduced pressure to leave a pale yellow residue. Trituration with ethanol affords the product as a white solid, m.p. 109 - 111°C.

Anal. calcd, for $C_{16}H_{19}NO_3$: C, 70.3; H, 7.1; N, 5.1
Found: C, 70.4; H, 7.3; N, 5.3.

Example 2: Preparation of N,N-bis[p-octadecyloxybenzyl]hydroxylamine

The procedure of Example 1 is repated using 7.24 g of sodium carbonate, 1.22 g of hydroxylamine hydrochloride and 15.38 g of p-octadecyloxybenzylbromide in dimethylformamide, to give the title compound as a white solid, m.p. 81 - 83°C.

Anal. calcd. for $C_{50}H_{87}NO_3$: C, 80.1; H, 11.7; N, 1.9
Found: C, 79,7; H, 12.0; N, 1.9.

Example 3: Preparation of 1,12-bis[4-(N-benzylhydroxyiminomethyl)phenoxy]dodecane

A mixture of 0.49 g of N-benzylhydroxylamine, 1.08 g of 1,12-bis[4-(bromomethyl)phenoxy]dodecane and 0.42 g of sodium carbonate in 5 ml of dimethylformamide is stirred at room temperature for 8 hours. the reaction mixture is partitioned between ethyl acetate and water, and the organic extract is washed with water, brine, dried over $MgSO_4$ and concentrated under reduced pressure. The residue is purified by flash chromatography to afford to title compound as a white solid, m.p. 105 - 108°C.

Anal. Calcd. for $C_{40}H_{52}N_2O_4$: C, 76.9; H, 8.4; H, 4.5
Found: C, 76.3; H, 8.4; N, 4.5.

Example 4: Processing of Polypropylene

Base Formulation

Polypropylene (®Profax 6501 from Himont USA) 100 parts
Calcium Stearate 0.10 part

The indicated stabilizers are solvent blended into polypropylene as solutions in methylene chloride and after removal of solvent by evaporation at reduced pressure, the resin is extruded using the following extruder conditions:

| | | Temperature (°C) |
|---|---|---|
| Cylinder #1 | | 232 |
| Cylinder #2 | | 246 |
| Cylinder #3 | | 260 |
| Gate #1 | | 260 |
| Gate #2 | | 260 |
| Gate #3 | | 260 |
| RPM | 100 | |

During extrusion, the internal extruder pressure is determined using a pressure transducer. After each of the first, third and fifth extrusions, resin pellets are compression molded into 3.2 mm thick plaques at 193°C and specimen yellowness index (YI) is determined according to ASTM D1925-63T.

The melt flow rate (MFR) is determined by ASTM method 1238 condition L. The melt flow rate varies inversely as the transducer pressure and both are a measure of the molecular weight for a specific type of polymer. The results are shown in the following tables.

Table 1

| Additives | Extrusion Temperature 260°C YI Color After Extrusion 1 | 3 | 5 |
|---|---|---|---|
| Base Resin | 4.4 | 6.6 | 8.0 |
| 0.1 % Antioxidant A | 7.1 | 11.0 | 12.0 |
| 0.1 % Antioxidant A + 0.05 % compound of Example 1 | 4.1 | 5.7 | 6.1 |

Table 2

| Additives | Extrusion Temperature 260°C | | | | |
|---|---|---|---|---|---|
| | YI Color After Extrusion | | | MFR (g/10 min) After Extrusion | |
| | 1 | 3 | 5 | 1 | 5 |
| Base Resin | 2.5 | 3.5 | 4.7 | 6.3 | 14.9 |
| 0.1 % Antioxidant A | 7.4 | 13.2 | 15.9 | 3.4 | 6.9 |
| 0.1 % Antioxidant A + 0.05 % compound of Example 2 | 2.1 | 3.8 | 6.5 | 2.6 | 4.0 |

Antioxidant A: Neopentyl tetrakis[3-(3',5'-di-tert-butyl-4'-hydroxyphenyl)propanoate].

These data thus indicate the effective color improving properties and process stabilization characteristics of the instant compounds.

## Claims

1. A composition of matter comprising an organic material subject to oxidative, thermal and/or actinic degradation and at least one compound of the formula (I)

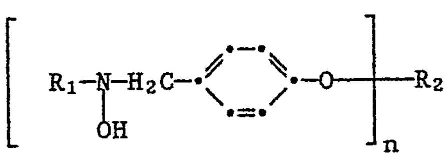

(I)

wherein

$R_1$ is hydrogen, alkyl of 1 to 36 carbon atoms, cycloalkyl of 5 to 12 carbon atoms, aralkyl of 7 to 9 carbon atoms or said aralkyl substituted by alkyl of 1 to 36 carbon atoms or $-OR_3$, wherein $R_3$ is hydrogen, alkyl

of 1 to 36 carbon atoms, cycloalkyl of 5 to 12 carbon atoms, aralkyl of 7 to 9 carbon atoms or said aralkyl substituted alkyl of 1 to 36 carbon atoms;
n is 1 - 4;
$R_2$ when n is 1, is hydrogen, alkyl of 1 to 36 carbon atoms, cycloalkyl of 5 to 12 carbon atoms, aralkyl of 7 to 9 carbon atoms, or said aralkyl substituted by alkyl of 1 to 36 carbon atoms;
$R_2$, when n is 2, is alkylene of 2 to 12 carbon atoms, alkylidene of 2 to 6 carbon atoms, cycloalkylene of 6 to 10 carbon atoms, arylene of 6 to 10 carbon atoms or alkylenearylenealkylene of 8 to 10 carbon atoms;
$R_2$, when n is 3, is alkanetriyl of 3 to 6 carbon atoms; and
$R_2$, when n is 4, is alkanetetrayl of 4 to 6 carbon atoms;
subject to the proviso that the organic material is a polyolefin homo- or copolymer, when n is 1.

2. The composition of claim 1, wherein $R_1$ is alkyl of 1 to 18 carbon atoms, cycloalkyl of 5 to 6 carbon atoms, benzyl, α-methylbenzyl or α,α-dimethylbenzyl.

3. The composition of claim 1, wherein $R_1$ is

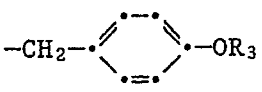

and $R_3$ is alkyl of 1 to 18 carbon atoms, cycloalkyl of 5 to 6 carbon atoms, benzyl, α-methylbenzyl or α,α-dimethylbenzyl.

4. The composition of claim 1, wherein n is 1.

5. The composition of claim 4, wherein $R_2$ is alkyl of 1 to 18 carbon atoms, cycloalkyl of 5 to 6 carbon atoms, benzyl, α-methylbenzyl or α,α-dimethylbenzyl.

6. The composition of claim 3, wherein n is 1 and $R_2$ is identical to $R_3$.

7. The composition of claim 1, wherein n is 2.

8. The composition of claim 7, wherein $R_2$ is alkylene of 2 to 12 carbon atoms, ethylidene, cyclohexylene, phenylene or xylylene.

9. The composition of claim 1, wherein the compound of formula (I) is N,N-bis[p-methoxybenzyl]hydroxylamine, N,N-bis[p-octadecyloxybenzyl]hydroxylamine or 1,12-bis[4-(N-benzylhydroxyiminomethyl)phenoxy]dodecane.

10. The composition of claim 1, wherein the organic material is a synthetic polymer.

11. The composition of claim 10, wherein the synthetic polymer is a polyolefin homopolymer of copolymer.

12. The composition of claim 1 which also contains a metal salt of a higher fatty acid and/or a phenolic antioxidant.

3. The composition of claim 12, wherein said phenolic antioxidant is neopentanetetrayl tetrakis(3,5-di-tert-butyl-4-hydroxyhydrocinnamate), n-octadecyl 3,5-di-tert-butyl-4-hydroxyhydrocinnamate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, 2,6-di-tert-butyl-p-cresol or 2,2′-ethylidene-bis(4,6-di-tert-butylphenol).

14. Use of compounds according to claim 1 for stabilizing an organic material against oxidative, thermal and/or actinic degradation.

15. A compound of the formula (Ia)

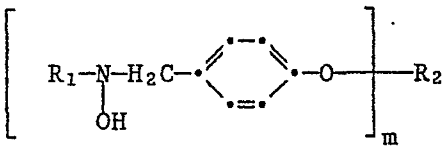

(Ia)

wherein
$R_1$ is hydrogen, alkyl of 1 to 36 carbon atoms, cycloalkyl of 5 to 12 carbon atoms, aralkyl of 7 to 9 carbon atoms or said aralkyl substituted by alkyl of 1 to 36 carbon atoms or-$OR_3$, wherein $R_3$ is hydrogen, alkyl of 1 to 36 carbon atoms, cycloalkyl of 5 to 12 carbon atoms, aralkyl of 7 to 9 carbon atoms or said aralkyl substituted by alkyl of 1 to 36 carbon atoms;
m is 2 - 4;
$R_2$, when m is 2, is alkylene of 2 to 12 carbon atoms, alkylidene of 2 to 6 carbon atoms, cycloalkylene of 6 to 10 carbon atoms, arylene of 6 to 10 carbon atoms or alkylenearylenealkylene of 8 to 10 carbon atoms;
$R_2$, when m is 3, is alkanetriyl of 3 to 6 carbon atoms; and
$R_2$, when m is 4, is alkanetetrayl of 4 to 6 carbon atoms.

European Patent Office

# EUROPEAN SEARCH REPORT

Application Number

EP 87 81 0551

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | US-A-3 926 909 (P. WEI)<br>* Column 1, lines 36,55-62 *<br>--- | 1-14 | C 08 K 5/13<br>C 08 L 23/02<br>C 07 C 83/04 |
| Y | EP-A-0 138 767 (CIBA GEIGY AG)<br>* Claims 1,5; example 1 *<br>--- | 1-14 | |
| A | EP-A-0 140 378 (E.I. DU PONT DE NEMOURS AND CO.)<br>* Claim 1; page 4, lines 26,27; page 7, lines 1-10 *<br>----- | 1 | |
| | | | **TECHNICAL FIELDS SEARCHED (Int. Cl.4)** |
| | | | C 07 C<br>C 08 K<br>C 08 L |

The present search report has been drawn up for all claims

| Place of search | Date of completion of the search | Examiner |
|---|---|---|
| THE HAGUE | 08-12-1987 | DE LOS ARCOS Y VELAZQUEZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)